(19) Europäisches Patentamt
European Patent Office
Office européen des brevets

(11) EP 2 272 637 B1

(12) EUROPÄISCHE PATENTSCHRIFT

(45) Veröffentlichungstag und Bekanntmachung des Hinweises auf die Patenterteilung:
09.04.2014 Patentblatt 2014/15

(51) Int Cl.:
B25J 9/16 (2006.01)

(21) Anmeldenummer: 10005820.5

(22) Anmeldetag: 04.06.2010

(54) **Verfahren und eine Vorrichtung zum Betreiben eines Manipulators**

Method and device for operating a manipulator

Procédé et dispositif destinés au fonctionnement d'un manipulateur

(84) Benannte Vertragsstaaten:
AL AT BE BG CH CY CZ DE DK EE ES FI FR GB GR HR HU IE IS IT LI LT LU LV MC MK MT NL NO PL PT RO SE SI SK SM TR

(30) Priorität: 08.07.2009 DE 102009032278

(43) Veröffentlichungstag der Anmeldung:
12.01.2011 Patentblatt 2011/02

(73) Patentinhaber: KUKA Roboter GmbH
86165 Augsburg (DE)

(72) Erfinder:
• Tscharnuter, Dietmar
  86316 Friedberg (DE)
• Rössig, Rene
  86159 Augsburg (DE)
• Purrucker, Thomas
  86165 Augsburg (DE)
• Michel, Wolfgang
  86868 Mittelneufnach (DE)

(74) Vertreter: Schlotter, Alexander Carolus Paul et al
Wallinger Ricker Schlotter Tostmann
Patent- und Rechtsanwälte
Zweibrückenstrasse 5-7
80331 München (DE)

(56) Entgegenhaltungen:
WO-A2-03/095125    DE-A1- 10 150 225

**Beschreibung**

Die vorliegende Erfindung betrifft ein Verfahren und eine Vorrichtung zum Betreiben eines Manipulators, insbesondere eines Roboters, auf Basis eines Manipulatormodells.

Ein Manipulatormodell beschreibt allgemein den Zusammenhang zwischen Gelenkkoordinaten $q$ des Manipulators und der Position $x$, z.B. Lage und/oder Orientierung, eines manipulatorfesten Referenzkoordinatensystems, insbesondere eines Werkzeugreferenzsystems ("Tool Center Point" TCP):

$$M: \quad q \mapsto x \qquad (1)$$

Der Positionsvektor $x$ kann dabei beispielsweise kartesische Koordinaten (x, y, z) und EULER- oder KARDAN-Winkel $(\alpha, \beta, \gamma)$ des TCPs in einem Basissystem des Manipulators oder seine DENAVIT-HARTENBERG-Koordinaten enthalten, der Gelenkvektor $q$ die Gelenkwinkel $(q_1,...,q_n)$ der Drehgelenke oder die Winkellagen von Drehantrieben eines Knickarmroboters, die Verfahrwege von Linearantrieben oder dergleichen.

Durch Lösen der durch das Manipulatormodell beschriebenen Rückwärtskinematik können zu einer gewünschten Soll-Position $x_s$ des manipulatorfesten Referenzkoordinatensystems insbesondere die zugehörigen Gelenkkoordinaten $q_s$ ermittelt werden, die eine Manipulatorsteuerung dann anfährt, um mit dem Manipulator die Soll-Position zu erreichen:

$$M^{-1}(x_s) = q_s \qquad (2)$$

In singulären Posen, bei redundanten Manipulatoren mit $\dim(q) > \dim(x_s)$, bei Mehrdeutigkeiten wie beispielsweise Ellbogen oben oder unten, oder bei mit dem Manipulator nicht erreichbaren Positionen können zusätzliche Bedingungen, beispielsweise Optimalitätskriterien, zur Lösung von (2) dienen.

Ein ideal-kinematisches Manipulatormodell, das nur durch theoretische kinematische Parameter, insbesondere theoretische Gliedlängen, Achsversatze und dergleichen, bestimmt ist, beschreibt nur absolut starre, toleranzfreie Manipulatoren exakt. Bei realen Manipulatoren hängt die Position jedoch auch von weiteren Parametern $p$, insbesondere Steifigkeiten der Glieder, Gelenke und Getriebe, Massen und Schwerpunktlagen, Getriebespielen und dergleichen ab:

$$M(p): \quad q \mapsto x \qquad (3)$$

Die DE 198 26 395 A1 schlägt daher ein positionsgenaues Manipulatormodell vor. Indem die Abweichungen zwischen erfassten Ist-Positionen $x_{ist}$ und theoretischen Positionen $x_M$ gemäß dem Modell bestimmen und die Parameter des Modells so angepasst werden, dass die Abweichungen minimal werden:

$$\left| \underbrace{M(q, p)}_{x_M} - x_{ist}(q) \right| \to Min! \Rightarrow p \qquad (4)$$

kann das positionsgenaue Manipulatormodell kalibriert werden. Werden dann die zugehörigen Gelenkkoordinaten $q_s$ zu einer Soll-Position $x_s$ gemäß diesem positionsgenauen Manipulatormodell ermittelt, kann der reale Manipulator im Rahmen der Modell- und Regelgenauigkeit die gewünschte Soll-Position $x_s$ exakter anfahren.

Dabei werden die Parameter bisher nur mit einer bestimmten, vom Manipulator bewegten Nutzlast, in der Regel einer Norm- oder Nennlast bestimmt. Insbesondere Nichtlinearitäten führen jedoch dazu, dass ein Manipulatormodell mit einem für eine bestimmte Nennlast optimierten Parametersatz bei hiervon abweichenden Nutzlasten ungenau wird, so dass der Manipulator eine gewünschte Position nicht mit der gewünschten Exaktheit anfährt.

Die EP 1 464 453 A2 schlägt daher vor, für verschiedene Nutzlasten $m_i = (m_i, r_{m,i})$ gekennzeichnet durch

Massen $m_i$ und Schwerpunktlagen $r_{m,i}$, für verschiedene Soll-Positionen $x_{s,j}$ jeweils einen Korrekturvektor $T(m_i, x_{s,j})$ zu messen. Dieser beschreibt die Abweichung zwischen der theoretischen Positionen $x_{kM}$ gemäß einem ideal-kinematischen Modell und der erfassten Ist-Positionen $x_{ist}$:

$$T_{i,j}\left(m_i, x_{ist,j}\right) = x_{kM} - x_{ist} \qquad (5)$$

Indem zu abgespeicherten Soll-Positionen $x_s$ einer Soll-Bahn, die mit einer Nutzlast $m$ abgefahren werden soll, jeweils derjenige Korrekturvektor hinzuaddiert wird, der der abgespeicherten Soll-Position und der zu bewegenden Nutzlast am nächsten liegt, werden die Abweichungen zwischen dem ideal-kinematischen Modell und dem realen Manipulator näherungsweise kompensiert.

Nachteilig ergeben sich dabei Unstetigkeiten, wenn zwischen den Soll-Positionen der Korrekturvektor und damit sozusagen das zugrundeliegende Modell, gemäß dem die Gelenkkoordinaten bestimmt werden, gewechselt wird. Insbesondere aber erfordert eine ausreichend feine Diskretisierung des Arbeitsraumes das Anfahren einer Vielzahl unterschiedlicher Lagen und Orientierungen mit verschiedenen Nutzlasten: Wird beispielsweise eine Nutzlast durch vier Parameter, nämlich ihre Masse m und die kartesischen Komponenten $x_m$, $y_m$, $z_m$ ihres Schwerpunktes, die Orientierung durch drei Koordinaten, beispielsweise die KARDAN-Winkel ($\alpha, \beta, \gamma$) des TCPs, und sein Lage durch weitere drei Koordinaten (x, y, z) beschrieben, und werden diese jeweils in n Werte diskretisiert, so müssen

$$n_m \cdot n_{x_m} \cdot n_{y_m} \cdot n_{z_m} \cdot n_\alpha \cdot n_\beta \cdot n_\gamma \cdot n_x \cdot n_y \cdot n_z$$

Korrekturvektoren gemessen und abgespeichert werden, aus denen jeweils der nächstliegende zu einer abgespeicherten Soll-Position zu ermitteln ist.

Aufgabe der vorliegenden Erfindung ist es, den Betrieb eines Manipulators, insbesondere eines Roboters, zu verbessern.

Diese Aufgabe wird durch ein Verfahren mit den Merkmalen des Anspruchs 1 gelöst. Anspruch 10 stellt eine Vorrichtung, Anspruch 11 bzw. 12 ein Computerprogramm bzw. ein Computerprogrammprodukt, insbesondere einen Datenträger oder ein Speichermedium, zur Durchführung eines Verfahrens nach Anspruch 1 unter Schutz. Die Unteransprüche betreffen vorteilhafte Weiterbildungen.

Die vorliegende Erfindung schlägt vor, einen oder mehrere Parameter eines positionsgenauen Manipulatormodells, insbesondere Elastizitäten bzw. Steifigkeiten von Getrieben, Gelenken und/oder Gliedern, Dämpfungen, insbesondere in Antrieben, Getrieben oder Strukturdämpfungen, Spiele wie Getriebe- oder Gelenkspiele, Toleranzen, geometrische Größen wie zum Beispiel Gliedlängen, Achsabstände, Schiefstände und dergleichen, mit zwei oder mehr verschiedenen Nennlasten zu bestimmen und Parameter des Manipulatormodells in Abhängigkeit von einer Nutzlast des Manipulators vorzugeben.

Im Gegensatz zu dem bekannten Verfahren, Parameter für eine einzige Nennlast zu optimieren, kann so insbesondere Nichtlinearitäten in den Parametern Rechnung getragen und damit auf Basis eines besser kalibrierten Modells exakter gearbeitet werden. Man erkennt dies am Beispiel einer einfachen nicht-linearen Feder: wird deren Federsteifigkeit nur anhand der Auslenkung unter einer einzigen Nennlast bestimmt, ergibt das Modell, das sich im Fall einer Feder auf das Federgesetz w = F/c mit der Auslenkung w, der Kraft F und der (nichtlinearen) Steifigkeit c(w) reduziert, bei anderen Nutzlasten falsche Auslenkungen.

Im Gegensatz zur Ermittlung von Korrekturvektoren für verschiedene Nennlasten und Posen kann dasselbe Manipulatormodell vorteilhaft für verschiedene, insbesondere auch vorher nicht vermessene Posen ausgewertet werden, sobald seine Parameter entsprechend der tatsächlichen Nutzlast vorgegeben sind. Somit können gemäß einem Aspekt der vorliegenden Erfindung insbesondere elastische Abweichungen besser und mit geringerem Aufwand kompensiert werden. Durch die Verwendung desselben Modells können in einer bevorzugten Ausführung Unstetigkeiten vermieden werden, wie sie die Diskretisierung der erfassten Abweichungen in verschiedenen Posen bedingt. In einer bevorzugten Weiterbildung kann das positionsgenaue Manipulatormodell ein kinetisches bzw. dynamisches Modell sein, welches kinetische bzw. dynamische Effekte, insbesondere Gewichtskräfte, Trägheits- und/oder gyroskopische Kräfte berücksichtigt.

Mit einem solchen erfindungsgemäß an die jeweilige Nutzlast adaptierten Modell kann der Manipulator beispielsweise ausgelegt und, insbesondere hard- oder softwaretechnisch optimiert werden. Gleichermaßen kann das Manipulatormodell auch zur Bahnplanung dienen, indem beispielsweise aus offline generierten Soll-Positionen eines manipulatorfesten Referenzsystems wie dem TCP die zugehörigen Gelenkkoordinaten ermittelt oder die beim Abfahren einer in Gelenkkoordinaten vorgegebenen Trajektorie eingenommenen Positionen des manipulatorfesten Referenzsystems bestimmt werden. Insbesondere kann das Modell auch bei der Steuerung des Manipulators verwendet werden, wobei vorliegend auch eine Regelung, i.e. die Vorgabe von Steuergrößen auf Basis eines Vergleichs von Soll- mit rückgeführten Ist-Größen, als Steuerung bezeichnet wird. Die Verwendung des positionsgenauen Manipulatormodells bei diesen und ähnlichen Anwendungen wird verallgemeinernd als Betreiben des Manipulators bezeichnet.

Das Bestimmen von Parametern des Manipulatormodells kann insbesondere dadurch erfolgen, dass eine oder vorzugsweise mehrere Posen, gekennzeichnet beispielsweise durch die Gelenkkoordinaten, angefahren, in diesen jeweils, beispielsweise optisch, etwa durch Abstandssensoren oder eine oder mehrere Kameras, eine Ist-Position einer manipulatorfesten Referenz erfasst und mit einer Position verglichen wird, die sich gemäß dem Modell bei den Gelenkkoordinaten ergibt. Insbesondere durch Minimierung der Abweichungen zwischen Ist- und Modell-Position für eine oder mehrere Posen können so zu jeder Nennlast zugehörige Parameter des Modells ermittelt werden.

In einer bevorzugten Ausführung werden Parameter des Manipulatormodells, auf dessen Basis der Manipulator betrieben wird, in Abhängigkeit von einer Nutzlast des Manipulators automatisch vorgegeben. Die Nutzlast kann beispielsweise aus einem Prozess bekannt sein, etwa, wenn ein Industrieroboter in vorgegebener Reihenfolge zyklisch verschiedene Nutzlast greift. Gleichermaßen ist es auch möglich, die Nutzlast durch den Benutzer einzugeben oder, insbesondere automatisch, zu identifizieren. Hierzu kann beispielsweise die Nutzlast, etwa anhand einer Markierung wie eines Barcodes oder anhand ihrer Kontur, erkannt und vorbekannten Nutzlasten zugeordnet werden. Sie kann auch, etwa aufgrund ihres gemessenen Gewichts oder ihrer Größe, vorgegebenen Nutzlastklassen zugeordnet werden. Es ist auch möglich, durch Bewegen der Nutzlast und Erfassen der hierzu erforderlichen bzw. dabei auftretenden Kräfte und Momente die Trägheitsparameter der Nutzlast, insbesondere ihre Masse, ihre Schwerpunktslage und/oder ihren Trägheitstensor zu ermitteln. Entsprechendes gilt auch für Komponenten des Manipulators, beispielsweise Masse, Schwerpunktlage und/oder Massenträgheiten einzelner Glieder.

Vorzugsweise werden Parameter des Manipulatormodells, auf dessen Basis der Manipulator betrieben wird, in Abhängigkeit von einer Nutzlast des Manipulators vorgegeben, während der Manipulator betrieben wird. Insbesondere bei dem vorstehend erwähnten zyklischen Greifen verschiedener Nutzlast kann so das Modell an die jeweils gegriffene Nutzlast adaptiert werden, indem etwa Parameter des Manipulatormodells, auf dessen Basis der Manipulator betrieben wird, in Abhängigkeit von der jeweiligen Nutzlast des Manipulators vorgegeben werden. Wird das Modell offline, etwa bei einer Vorab-Bahnplanung oder -optimierung, eingesetzt, kann es aus den gleichen Gründen auch hier vorteilhaft sein, Parameter des Manipulatormodells in Abhängigkeit unterschiedlicher Nutzlasten des Manipulators vorzugeben.

Entspricht eine Nutzlast des Manipulators keiner der Nennlasten, für die die Parameter des Modells bestimmt worden sind, können für diese Nutzlast Parameter des Manipulatormodells, auf dessen Basis der Manipulator betrieben wird, aus den Parametern, die mit verschiedenen Nennlasten bestimmt worden sind, interpoliert werden. Als Interpolation wird dabei insbesondere eine lineare Interpolation aus zwei oder mehr benachbarten Werten bezeichnet, aber gleichermaßen beispielsweise auch die Wahl der Parameter für diejenige(n) Nennlast(en), die der Nutzlast am nächsten kommt bzw. kommen.

Weitere Vorteile und Merkmale ergeben sich aus den Unteransprüchen und den Ausführungsbeispielen. Hierzu zeigt, teilweise schematisiert:

Fig. 1:      einen eingliedrigen Roboter während des Betriebs nach einer Ausführung der vorliegenden Erfindung;

Fig. 2:      den Roboter nach Fig. 1 mit einer anderen Nennlast;

Fig. 3:      den Roboter nach Fig. 1, 2 mit einer Nutzlast in einer anderen Pose; und

Fig. 4:      den Ablauf eines Verfahrens nach einer Ausführung der vorliegenden Erfindung.

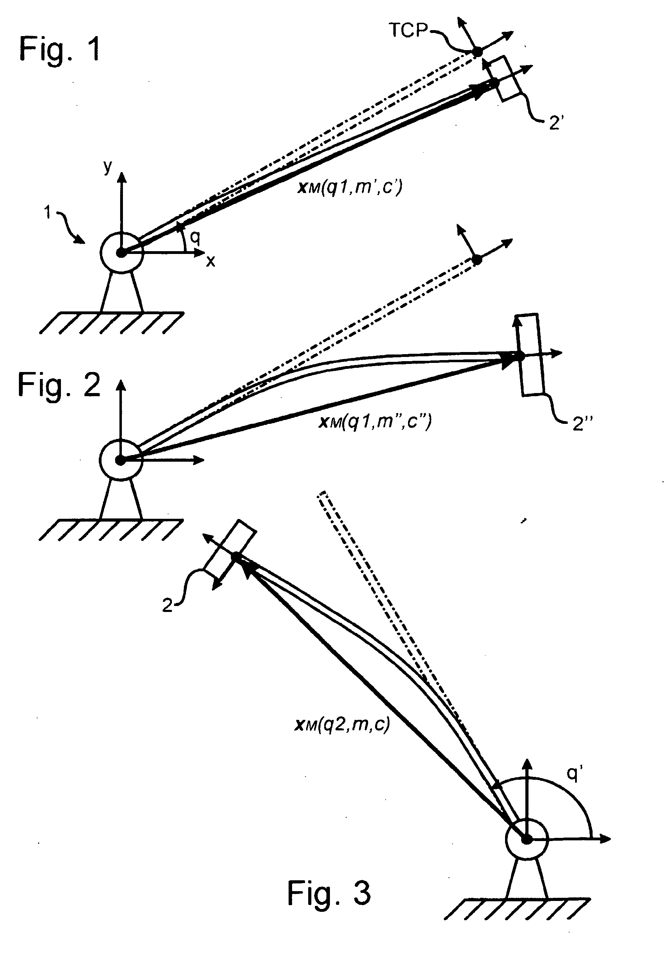

Fig. 1 zeigt schematisiert einen eingliedrigen Roboter 1 mit einem um den Gelenkwinkel q drehbaren Arm, an dessen gelenkfernem Ende eine erste Nennlast 2' im TCP des Roboters angeordnet ist.

Strichpunktiert ist die Pose eingezeichnet, wie sie ein absolut starrer, toleranzfreier Roboter bei einem Gelenkwinkel q1 einnehmen und wie sie von einem ideal-kinematischen Manipulatormodell beschrieben würde.

Bei einem realen Roboter 1 weicht jedoch die Position $x$ des TCPs aufgrund von Elastizitäten in Gelenk und Arm, Gelenkspiel, Toleranzen etc. ab. Dies wird durch ein positionsgenaues Manipulatormodell $M$ beschrieben, das im vorliegenden Ausführungsbeispiel vereinfacht mit

$$M\left(\begin{matrix} c \\ \underline{\varphi} \\ p \end{matrix}\right): \quad \begin{pmatrix} \cos q + \dfrac{m \cdot g \cdot \cos q \sin q}{c} \\ \sin q - \dfrac{m \cdot g \cdot \cos^2 q}{c} \end{pmatrix} \mapsto \begin{pmatrix} x \\ y \\ \underline{x_M} \end{pmatrix} \qquad (3')$$

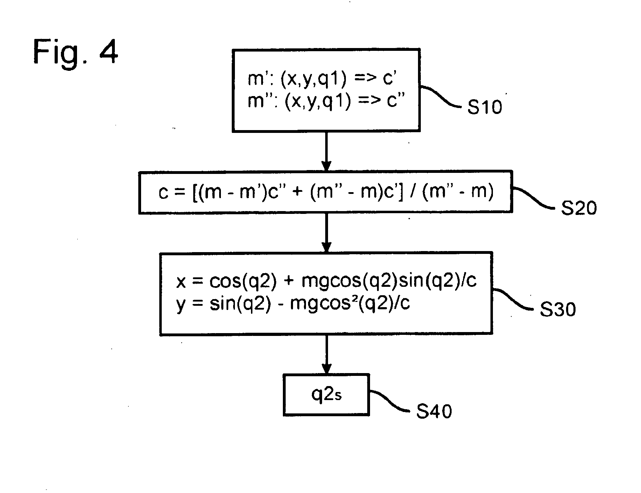

nur linear die Durchbiegung w = F/c am Ende des Arms unter der Last F = mgcos(q) berücksichtigt. Um die Biegesteifigkeit c zu bestimmen, wird in einem Schritt S10 (vgl. Fig. 4) eine bekannte erste Nennlast 2' mit der Masse m' im TCP angeordnet, eine Pose q1 angefahren, in dieser die Ist-Position $x_{ist}$ = ($x_{TCP}$, $y_{TCP}$) des TCPs erfasst und der Parameter c' so bestimmt, dass die Abweichung zwischen der erfassten Ist-Positionen und der theoretischen Positionen gemäß dem parameterabhängigen positionsgenauen Modell (3') minimal wird.

Am Beispiel einer nichtlinearen Biegesteifigkeit wird deutlich, dass mit der Vermessung der Abweichungen mit nur einer Nennlast 2' dasselbe Modell **M** nicht optimal für den gesamten Betriebsbereich ausgelegt werden kann. Im Ausführungsbeispiel ist die Biegesteifigkeit beispielsweise degressiv: wird statt der Nennlast 2' mit der Masse m' eine andere Nennlast 2" mit selber Schwerpunktlage, aber der doppelten Masse m" im TCP angeordnet, ergibt sich nicht die doppelte Durchbiegung w" = 2F/c = 2 w', sondern, wie in Fig. 2 erkennbar, beispielsweise eine größere.

Daher wird erfindungsgemäß der Parameter c des positionsgenauen Manipulatormodells **M** auch für wenigstens eine weitere Nennlast 2" mit anderer Masse m" = 2m' bestimmt, indem in Schritt S10 wenigstens eine, vorzugsweise dieselbe Pose q1 angefahren, in dieser die Ist-Position des TCPs erfasst und der Parameter c" so bestimmt wird, dass die Abweichung zwischen der erfassten Ist-Position und der theoretischen Position gemäß dem parameterabhängigen positionsgenauen Modell wiederum minimal wird. Die Parameter c', c" werden in Abhängigkeit von der Nennlast m' bzw. m", für die sie ermittelt wurden, abgespeichert (S10).

Soll nun der Roboter 1 auf Basis des Manipulatormodells betrieben, beispielsweise gesteuert werden, indem der Benutzer zum Beispiel Soll-Positionen $x_s$ des TCPs vorgibt, in einer Bahnplanung die entsprechenden Gelenkwinkel $q_s$ ermittelt und von einer Robotersteuerung angefahren werden, wird in einem Schritt S20 zunächst der Parameter c des Manipulatormodells, auf dessen Basis der Manipulator betrieben wird, in Abhängigkeit von der Nutzlast 2 mit der Masse m vorgegeben. In Fig. 4 ist hierzu eine lineare Interpolation der Biegesteifigkeit c für die Masse m aus den zuvor bestimmten Steifigkeiten c', c" für m' bzw. m" angedeutet.

Mit diesem Parameter c werden in Schritt S30 gemäß

$$\left\| \begin{pmatrix} \cos q + \dfrac{m \cdot g \cdot \cos q \sin q}{c} \\ \sin q - \dfrac{m \cdot g \cdot \cos^2 q}{c} \end{pmatrix} - \underbrace{\begin{pmatrix} x_s \\ y_s \end{pmatrix}}_{x_s} \right\| \to Min! \Rightarrow q_s \qquad (2')$$

auf Basis des positionsgenauen Manipulatormodells die zugehörigen Gelenkwinkel $q_s$ ermittelt und angefahren (S40), wie dies in Fig. 3 angedeutet ist.

Im Gegensatz zu einer Kompensation von elastischen Abweichungen auf Basis eines positionsgenauen Manipulatormodells, dessen Parameter nur für eine Nennlast kalibriert wurden, kann der Roboter exakter betrieben werden. Die Figurenfolge Fig. 1 bis Fig. 3 zeigt auch den Vorteil gegenüber einem Verfahren mit Korrekturvektoren, die vorab für verschiedene Nutzlasten und Posen bestimmt werden müssen: Um in allen drei Betriebsfällen (q1, m') (Fig. 1), (q1, m") (Fig. 2) und (q2, m) (Fig. 3) die Abweichungen gegenüber dem ideal-kinematischen Modell zu kompensieren, muss der Roboter vorab auch in diesen Konfigurationen vermessen werden. Werden nur die beiden Messungen nach Fig. 1, Fig. 2 durchgeführt, in denen sich eine Abeichung nach unten und rechts ergibt, würde die Extrapolation der bekannten Korrekturvektoren auch in der Pose der Fig. 3 eine Abweichung nach unten und rechts liefern und damit zu einem deutlich falschen Soll-Gelenkwinkel q2$_s$ führen. Wird dagegen erfindungsgemäß der Parameter c für verschiedene Nennlasten bestimmt und anhand der vorliegenden Nutzlast 2 im Modell vorgegeben, kann auf Basis des positionsgenauen Manipulatormodells auch die Pose nach Fig. 3 präzise angefahren werden, da das positionsgenaue Modell in der Pose nach Fig. 3 eine Abweichung nach unten und links ergibt.

Bezugszeichenliste

| 1 | Roboter |
|---|---|
| 2 | Nutzlast |
| 2', 2" | Nennlast |
| q | Gelenkwinkel |
| *x* | Position des TCPs von 1 |

**Patentansprüche**

1.  Verfahren zum Betreiben eines Manipulators, insbesondere eines Roboters (1), mit den Schritten:

    Bestimmen (S10) von Parametern (*p*) eines positionsgenauen Manipulatormodells (*M*);
    Betreiben des Manipulators auf Basis des Manipulatormodells (S30, S40);
    **dadurch gekennzeichnet, dass** die
    Parameter (c', c") desselben Manipulatormodells mit verschiedenen Nennlasten (m', m") bestimmt werden (S10), und die
    Parameter (c) des Manipulatormodells, auf dessen Basis der Manipulator betrieben wird, in Abhängigkeit von einer Nutzlast (m) des Manipulators vorgegeben werden (S20), wobei aus den Parametern, die auf verschiedenen Nennlasten bestimmt worden sind, interpoliert wird, wenn die Nutzlast keiner der Nennlasten entspricht.

2.  Verfahren nach Anspruch 1, **dadurch gekennzeichnet, dass** das Betreiben des Manipulators dessen Auslegung, Optimierung, Bahnplanung und/oder Steuerung umfasst.

3.  Verfahren nach einem der vorhergehenden Ansprüche, **dadurch gekennzeichnet, dass** Parameter des positionsgenauen Manipulatormodells eine oder mehrere geometrische Größen, Elastizitäten (c), Dämpfungen und/oder Spiele umfassen.

4.  Verfahren nach einem der vorhergehenden Ansprüche, **dadurch gekennzeichnet, dass** zum Bestimmen von Parametern des Manipulatormodells wenigstens eine Pose (q1) angefahren und in dieser eine Ist-Position ($x_{ist}$) einer manipulatorfesten Referenz erfasst wird (S10).

5.  Verfahren nach einem der vorhergehenden Ansprüche, **dadurch gekennzeichnet, dass** Parameter des Manipulatormodells, auf dessen Basis der Manipulator betrieben wird, in Abhängigkeit von einer Nutzlast des Manipulators automatisch vorgegeben werden.

6.  Verfahren nach einem der vorhergehenden Ansprüche, **dadurch gekennzeichnet, dass** die Nutzlast des Manipulators, insbesondere automatisch, identifiziert wird.

7.  Verfahren nach einem der vorhergehenden Ansprüche, **dadurch gekennzeichnet, dass** Parameter des Manipulatormodells, auf dessen Basis der Manipulator betrieben wird, in Abhängigkeit von einer Nutzlast des Manipulators vorgegeben werden, während der Manipulator betrieben wird.

8.  Verfahren nach einem der vorhergehenden Ansprüche, **dadurch gekennzeichnet, dass** Parameter des Manipulatormodells, auf dessen Basis der Manipulator betrieben wird, verändert werden, wenn die Nutzlast des Manipulators verändert wird.

9.  Verfahren nach einem der vorhergehenden Ansprüche, **dadurch gekennzeichnet, dass** Parameter des Manipulatormodells, auf dessen Basis der Manipulator betrieben wird, aus Parametern, die mit verschiedenen Nennlasten bestimmt worden sind, interpoliert werden (S20).

10. Vorrichtung zum Betreiben eines Manipulators, insbesondere eines Roboters (1), mit:

    einer Speichereinrichtung zum Abspeichern eines positionsgenauen Manipulatormodells (*M*) und Parametern (*p*) des Manipulatormodells;
    einer Auswerteeinrichtung zum Auswerten des Manipulatormodells;
    **gekennzeichnet durch**
    eine Parameterwahleinrichtung zur Vorgabe von Parametern (c) des Manipulatormodells, auf dessen Basis der Manipulator betrieben wird, in Abhängigkeit von einer Nutzlast des Manipulators (2), wobei die Parameterwahleinrichtung zur Durchführung eines Verfahrens nach einem der vorhergehenden Ansprüche eingerichtet ist.

11. Computerprogramm, das ein Verfahren nach einem der Ansprüche 1 bis 9 ausführt, wenn es in einer Vorrichtung nach Anspruch 10 abläuft.

12. Computerprogrammprodukt mit Programmcode, der auf einem maschinenlesbaren Träger gespeichert ist und ein Computerprogramm nach Anspruch 11 umfasst.

**Claims**

1. A method for operating a manipulator, in particular a robot (1), comprising the steps of:

   Determining (S10) of parameters ($p$) of a position-accurate manipulator model ($M$);
   Operating the manipulator on the basis of the manipulator model (S30, S40);
   **characterized in that**
   said parameters (c', c") of the same manipulator model are determined (S10) with several nominal loads (m', m"), and that said parameters (c) of the manipulator model, on the basis of which the manipulator is operated, are predetermined depending on a payload (m) of the manipulator (S20), wherein it is interpolated from the parameters that have been determined with several nominal loads if the payload corresponds to none of the nominal loads.

2. A method according to claim 1, **characterized in that** the operation of the manipulator comprises its design, optimization, path planning and/or control.

3. A method according to one of the preceding claims, **characterized in that** parameters of the position-accurate manipulator model comprise one or more geometric qualities, elasticities (c), dampings and/or backlash.

4. A method according to one of the preceding claims, **characterized in that** in order to determine parameters of the manipulator model at least one pose (q1) is moved towards and in this pose a current position ($x_{ist}$) of a manipulator-fixed reference is determined (S10).

5. A method according to one of the preceding claims, **characterized in that** parameters of the manipulator model, on the basis of which the manipulator is operated, are automatically predetermined depending on a payload of the manipulator.

6. A method according to one of the preceding claims, **characterized in that** the payload of the manipulator is, in particular automatically, identified.

7. A method according to one of the preceding claims, **characterized in that** parameters of the manipulator model, on the basis of which the manipulator is operated, are predetermined depending on a payload of the manipulator, while the manipulator is operated.

8. A method according to one of the preceding claims, **characterized in that** parameters of the manipulator model, on the basis of which the manipulator is operated, are changed, if the payload of the manipulator is changed.

9. A method according to one of the preceding claims, **characterized in that** parameters of the manipulator model, on the basis of which the manipulator is operated, are interpolated from parameters which have been determined with several nominal loads (S20).

10. An apparatus for operating of a manipulator, in particular of a robot (1), with:

    a storage means for storing a position-accurate manipulator model ($M$) and parameters ($p$) of the manipulator model;
    an evaluation device for evaluating the manipulator model;
    **characterized by**
    a device for choosing parameters for predetermining of parameters (c) of the manipulator model, on the basis of which the manipulator is operated,
depending on a payload of the manipulator (2), wherein the device for choosing parameters is arranged to carry out a method according to one of the preceding claims.

11. A computer program, that realizes a method according to one of the claims 1 to 9, if said program runs in an apparatus according to claim 10.

12. A computer program product with program code, which is stored on a machine-readable carrier and which comprises a computer program according to claim 11.

**Revendications**

1. Procédé permettant de faire fonctionner un manipulateur, en particulier un robot (1), comprenant les étapes consistant à :

   définir (S10) des paramètres (p) d'un modèle de manipulateur (M) à positionnement précis ;
   faire fonctionner le manipulateur sur la base du modèle de manipulateur (S30, S40) ;
   **caractérisé en ce que**
   les paramètres (c', c") de ce même modèle de manipulateur sont définis avec différentes charges nominales (m', m") (S10), et
   les paramètres (c) du modèle de manipulateur, sur la base duquel on fait fonctionner le manipulateur, sont prédéfinis en fonction d'une charge utile (m) du manipulateur (S20), une interpolation étant mise en oeuvre à partir des paramètres qui ont été définis avec différentes charges nominales, lorsque la charge utile ne correspond à aucune des charges nominales.

2. Procédé selon la revendication 1, **caractérisé en ce que** le fonctionnement du manipulateur englobe sa conception, son optimisation, sa planification et/ou sa commande.

3. Procédé selon l'une quelconque des revendications précédentes, **caractérisé en ce que** les paramètres du modèle de manipulateur à positionnement précis comprennent une ou plusieurs grandeurs géométriques, élasticités (c), amortissements et/ou jeux.

4. Procédé selon l'une quelconque des revendications précédentes, **caractérisé en ce que** pour définir les paramètres du modèle de manipulateur, au moins une pose (q1) est mise en marche et une position effective ($x_{ist}$) d'une référence fixe pour le manipulateur est détectée dans cette dernière (S10).

5. Procédé selon l'une quelconque des revendications précédentes, **caractérisé en ce que** les paramètres du modèle de manipulateur, sur la base duquel on fait fonctionner le manipulateur, sont prédéfinis automatiquement en fonction d'une charge utile du manipulateur.

6. Procédé selon l'une quelconque des revendications précédentes, **caractérisé en ce que** la charge utile du manipulateur est identifiée, en particulier automatiquement.

7. Procédé selon l'une quelconque des revendications précédentes, **caractérisé en ce que** les paramètres du modèle de manipulateur, sur la base duquel on fait fonctionner le manipulateur, sont prédéfinis en fonction d'une charge utile du manipulateur, pendant qu'on fait fonctionner le manipulateur.

8. Procédé selon l'une quelconque des revendications précédentes, **caractérisé en ce que** les paramètres du modèle de manipulateur, sur la base duquel on fait fonctionner le manipulateur, sont modifiés lorsque la charge utile du manipulateur est modifiée.

9. Procédé selon l'une quelconque des revendications précédentes, **caractérisé en ce que** les paramètres du modèle de manipulateur, sur la base duquel on fait fonctionner le manipulateur, sont interpolés à partir des paramètres qui ont été définis avec différentes charges nominales (S20).

10. Dispositif permettant de faire fonctionner un manipulateur, en particulier un robot (1), comprenant :

un dispositif mémoire permettant de mettre en mémoire un modèle de manipulateur (M) à positionnement précis et les paramètres (p) du modèle de manipulateur ;

un dispositif d'évaluation permettant d'évaluer le modèle de manipulateur ;

**caractérisé par**

un dispositif de sélection de paramètres permettant de prédéfinir les paramètres (c) du modèle de manipulateur, sur la base duquel on fait fonctionner le manipulateur, en fonction d'une charge utile du manipulateur (2), le dispositif de sélection de paramètres étant conçu pour mettre en oeuvre un procédé selon l'une quelconque des revendications précédentes.

11. Programme informatique mettant en oeuvre un procédé selon l'une quelconque des revendications 1 à 9 lorsqu'il se déroule dans un dispositif selon la revendication 10.

12. Produit-programme informatique pourvu d'un code de programme, qui est mis mémoire sur un support lisible par ordinateur et comprend un programme informatique selon la revendication 11.

Fig. 1

$x_M(q1,m',c')$

TCP

2'

Fig. 2

$x_M(q1,m'',c'')$

2''

Fig. 3

$x_M(q2,m,c)$

2

q'

# Fig. 4

$$m': (x,y,q1) \Rightarrow c'$$
$$m'': (x,y,q1) \Rightarrow c''$$

S10

$$c = [(m - m')c'' + (m'' - m)c'] / (m'' - m)$$

S20

$$x = \cos(q2) + mg\cos(q2)\sin(q2)/c$$
$$y = \sin(q2) - mg\cos^2(q2)/c$$

S30

q2s

S40

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19826395 A1

- EP 1464453 A2